# EUROPEAN PATENT SPECIFICATION

(11) **EP 2 509 165 B1**
(45) Date of publication and mention of the grant of the patent: **19.07.2017**
(21) Application number: 12001651.4
(22) Date of filing: 09.03.2012
(51) Int. Cl.: H01R 13/50, H01R 13/74, B29C 45/14, H01R 43/18

(54) **Vehicle-side connector**
Fahrzeugseitenstecker
Connecteur latéral de véhicule

(30) Priority: 05.04.2011 JP 2011083480
(43) Date of publication of application: 10.10.2012
(73) Proprietor: Sumitomo Wiring Systems, Ltd., Yokkaichi-city Mie 510-8503 (JP)
(72) Inventor: Osawa, Kiyoshi, Yokkaichi-city Mie 510-8503 (JP)
(74) Representative: Müller-Boré & Partner Patentanwälte PartG mbB

(56) References cited:
- EP-A2- 0 844 698
- CH-A2- 698 969
- JP-A- H07 142 119
- JP-A- 2010 166 756
- US-A1- 2002 155 756
- ROSATO D V ET AL: "Injection Molding Handbook, Design Features that Influence Performance", 1 January 1995 (1995-01-01), INJECTION MOLDING HANDBOOK : THE COMPLETE MOLDING OPERATION ; TECHNOLOGY, PERFORMANCE, ECONOMICS, CHAPMAN & HALL, NEW YORK, PAGE(S) 623 - 626, XP002610519, ISBN: 978-0-412-99381-7 * the whole document *
- JOHANNABER F ET AL: "Fertigungsgerechte Formteilgestaltung", 13 November 2001 (2001-11-13), HANDBUCH SPRITZGIESSEN, HANSER, MUNCHEN, WIEN, PAGE(S) 1099 - 1103, XP002610520, ISBN: 978-3-446-15632-6 * page 1100 *

## Description

The present invention relates to a vehicle-side connector to be connected to a charging connector during or for charging.

A connector disclosed in Japanese Unexamined Patent Publication No. 2010-166756 is, for example, known as a vehicle-side connector to be mounted on a vehicle body of a hybrid vehicle or an electric vehicle. This vehicle-side connector includes a connecting portion made of synthetic resin and to be connected to a charging connector, and a mounting piece made of synthetic resin and integrally provided to project from the outer surface of the connecting portion. A plurality of collars made of metal are press-fitted to this mounting piece, and the vehicle-side connector is mounted and fixed to the vehicle body by inserting fixing bolts into these collars and tightening them into the vehicle body.

To prevent the entrance of water into the vehicle interior through a clearance between the mounting piece and the vehicle, a seal member such as a surface seal is mounted between the mounting piece and the vehicle. However, if the mounting piece is thick, sinks are formed on the surface of the mounting piece when the mounting piece is molded, which reduces the adhesion of the seal member to the mounting piece. Thus, the mounting piece is generally set to be thin.

However, if the mounting piece is set to be thin, the strength of the mounting piece decreases. If the strength of the mounting piece decreases, the mounting piece may be resiliently deformed, clearances may be formed in close-contact parts of the mounting piece and the collars and the mounting piece may be detached from the collars, whereby the mounting piece may be detached from the vehicle, if the charging connector connected to the connecting portion is strongly pulled, for example, in a direction different from a proper pulling direction and a force acts on the connecting portion in the direction crossing the proper pulling direction. As a countermeasure to this, it is being studied to increase a locking force between the collars and the mounting piece by providing flanges on end portions of the collars and engaging the flanges and the mounting piece in a connecting direction.

However, if only the locking force between the collars and the mounting piece is increased, stress resulting from a pulling force may act on a boundary part between the connecting portion and the mounting piece and the boundary part between the mounting piece and the connecting portion may be cracked or split although the detachment of the mounting piece from the collars can be suppressed.

JP H7 142 119 A discloses a connector with cover member to selectively fit the cover member to two positions in right and left of a connector housing by combining the same parts items.

US 2002/0155756 A1 discloses a shield connector directly-mountable on equipment in which collars are fitted in respective insertion holes in a mounting flange.

The present invention was completed in view of the above situation and an object thereof is to suppress the detachment of a mounting piece from a vehicle and to improve durability of the connector.

This object is solved according to the invention by the features of the independent claims. Particular embodiments of the invention are subject of the dependent claims.

Accordingly, durability of the connector is improved by suppressing the breakage of a boundary part between the mounting piece and a connecting portion.

According to the invention, there is provided a vehicle-side connector to be connected to a charging connector in or for charging a battery of a vehicle, comprising a connecting portion which is made of synthetic resin and to be connected to the charging connector; a mounting piece which is made of synthetic resin and integrally or unitarily provided to the outer surface of the connecting portion; at least one collar which includes a flange engageable with the mounting piece in a connecting direction; wherein the mounting piece includes at least one holding portion to be engaged with the flange of the collar; wherein the holding portion is thicker than the mounting piece at an outer peripheral edge portion of the connecting portion and provided at an outer peripheral edge portion of the collar; and a plurality of reinforcing portions is provided to connect the mounting piece and the connecting portion, wherein the reinforcing portions comprise one or more large-seize reinforcing portions projecting to a space between adjacent collars and one or more small-size reinforcing portions projecting towards at least part of the collars.

According to the thus configured vehicle-side connector, a locking force between the collar and the mounting piece can be increased by engaging the flange of the collar and the mounting piece in the connecting direction and a boundary part between the mounting piece and the connecting portion can be mainly reinforced by the reinforcing portion. This can suppress the detachment of the mounting piece from the vehicle and the breakage of the mounting piece and the connecting portion while the mounting piece is made thinner.

Further, since the mounting piece can be made thinner, the formation of sinks on the surface of the mounting piece can be suppressed and the adhesion of a seal member to the mounting piece in mounting the seal member to the mounting piece can be improved.

The present invention is preferably embodied as follows.

The mounting piece may be formed to project from the outer surface of the connecting portion over the entire circumference.

A plurality of reinforcing portions in the form of substantially flat plates may be integrally or unitarily formed to a surface of the mounting piece substantially facing the connecting portion and the outer surface of the connecting portion.

According to this configuration, a force concentrated on the boundary part between the mounting piece and the connecting portion can be distributed to the surface of the mounting piece facing the connecting portion and the outer surface of the connecting portion and the plurality of reinforcing portions can reinforce around the connecting portion. Thus, the breakage at the boundary part between the mounting piece and the connecting portion can be suppressed.

The mounting piece includes at least one holding portion to be engaged with the flange of the collar.

The holding portion is thick and provided at an outer peripheral edge portion of the collar.

If the charging connector is strongly pulled in a direction crossing a proper pulling direction and a force acts on the connecting portion in the direction crossing the proper pulling direction, a strong pulling force acts on the holding portion engaged with the flange of the collar out of the mounting piece. However, according to the above configuration, a part of the mounting piece around the collar where a pulling force acts most can be reinforced.

The holding portion may be integrally or unitarily formed to the reinforcing portion.

Since a pulling force acts most on the holding portion out of the mounting piece, a part between the holding portion and the connecting portion is more subject to breakage. In this respect, since the reinforcing portion is integrally formed to the holding portion according to the above configuration, the part between the holding portion and the connecting portion can be reliably reinforced.

The flange of the collar may be (at least partly) accommodated into an accommodating groove of the holding portion, and a surface of the accommodating groove and a surface of the flange are engaged in a connecting direction and the mounting piece may be so held as not be detached from the collar by at least partly accommodating the flange into the accommodating groove.

The large-size reinforcing portions may extend to an edge of the mounting piece.

The large-size reinforcing portions may project in the lateral and/or forward directions more than the small-size reinforcing portions being smaller than the large-size reinforcing portions.

According to the above, it is possible to suppress the detachment of a mounting piece from a vehicle and the breakage of a boundary part between the mounting piece and a connecting portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a vehicle-side connector,
FIG. 2 is a front view of the vehicle-side connector,
FIG. 3 is a side view of the vehicle-side connector,
FIG. 4 is a section along IV-IV of FIG. 2, and
FIG. 5 is a section along V-V of FIG. 2.

### <Embodiment>

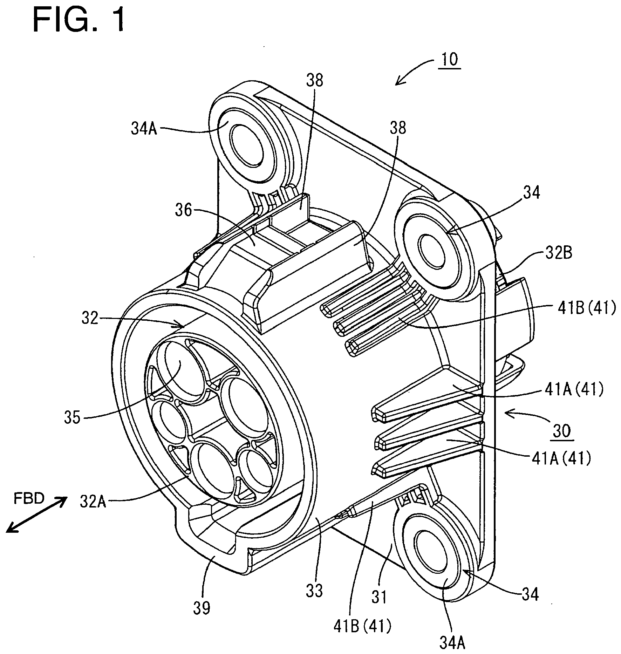

One particular embodiment of the present invention is described with reference to FIGS. 1 to 5.

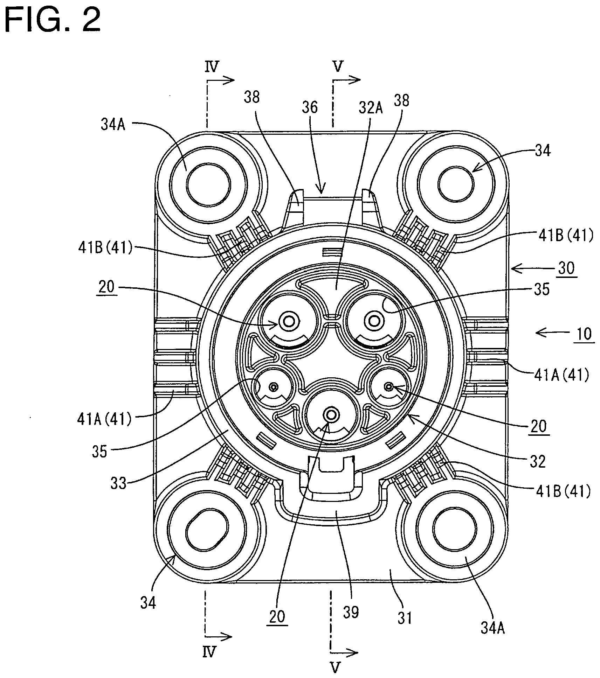

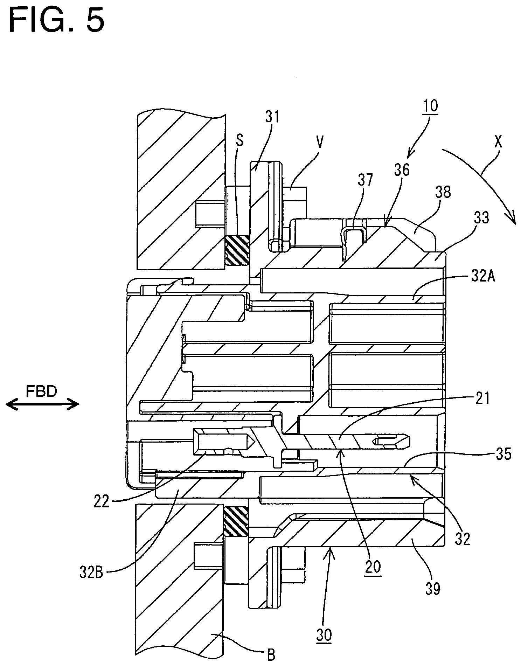

As shown in FIGS. 1 and 2, a vehicle-side connector 10 of this embodiment includes one or more, particularly a plurality of (five in this embodiment) vehicle-side terminal fittings 20 and a connector housing 30 made of synthetic resin. This vehicle-side connector 10 is to be fixed to a vehicle B as shown in FIG. 5, and an unillustrated charging connector is connectable to the connector housing 30 from front.

As shown in FIG. 5, the vehicle-side terminal fitting 20 includes a terminal connecting portion 21 (particularly substantially in the form of a round pin and) a wire connecting portion 22 to be connected to an unillustrated wire. The terminal connecting portion 21 is electrically conductively connected to a charging-side terminal fitting provided in the charging connector when the charging connector is connected to the connector housing 30.

As shown in FIGS. 1 and 5, the connector housing 30 includes a mounting piece 31 in the form of a (particularly substantially rectangular or polygonal) flat plate or flange, a (particularly substantially cylindrical or tubular) terminal accommodating portion 32 penetrating through this mounting piece 31 in forward and backward directions FBD, and a (particularly substantially cylindrical or tubular) receptacle (as an example of a "connecting portion") 33 integrally or unitarily provided to the mounting piece 31 at least partly around the terminal accommodating portion 32.

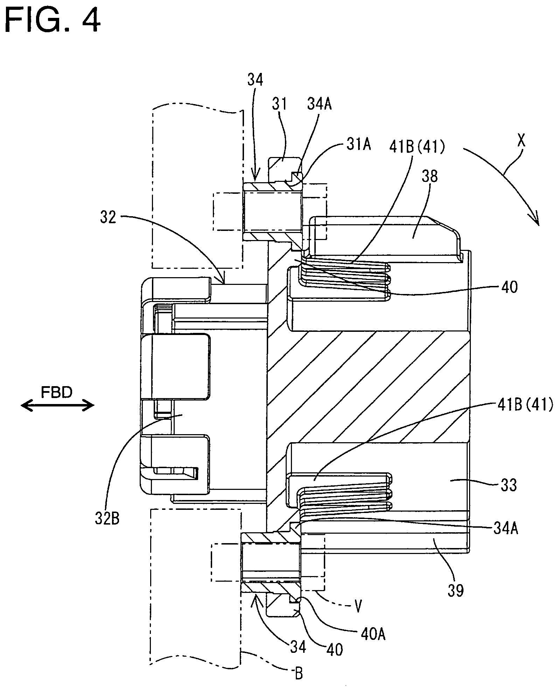

As shown in FIG. 4, one or more collar mounting holes 31 A are provided at one or more positions (e.g. at four corners) of the mounting piece 31, and respective collars 34 at least partly are press-fitted or mounted into these collar mounting holes 31 A. As shown in FIGS. 4 and 5, the connector housing 30 is to be fixed to the vehicle by inserting one or more fixing bolts V into these one or more collars 34 and tightening them into the vehicle B.

Further, as shown in FIG. 5, a seal member (such as an annular surface seal) S is to be mounted on an outer peripheral edge portion of the terminal accommodating portion 32 between (particularly the rear surface of) the mounting piece 31 and the vehicle B. This seal member (particularly surface seal) S is to be brought into close contact with the vehicle B and the rear surface of the mounting piece 31, thereby providing fluid- or waterproofing lest fluid or water should enter the vehicle B through a mount hole B1 formed in the vehicle B through a clearance between the vehicle B and the mounting piece 31.

As shown in FIG. 5, the terminal accommodating portion 32 includes a forward projecting portion 32A substantially projecting forward from the mounting piece 31 and/or a backward projecting portion 32B substantially projecting backward from the mounting piece 31. Further, one or more, particularly a plurality of (five in this embodiment) cavities 35 are formed to penetrate through the terminal accommodating portion 32 substantially in forward and backward directions FBD, and the one or more vehicle-side terminal fittings 20 are held in or at least partly inserted into the respective cavities 35.

As shown in FIGS. 1 and 5, the receptacle 33 particularly is arranged at least partly around the forward projecting portion 32A of the terminal accommodating portion 32, and substantially extends from the front surface of the mounting piece 31 to the front end surface of the forward projecting portion 32A. That is, the mounting piece 31 is formed to project from (particularly the outer peripheral surfaces of) the terminal accommodating portion 32 and/or the receptacle 33 particularly over the substantially entire circumference. The unillustrated charging connector is at least partly fittable or insertable into the receptacle 33, and a charging-side receptacle provided on the charging connector is at least partly fitted or inserted into a space between the receptacle 33 and the forward projecting portion 32A as the charging connector is fitted or inserted into the receptacle 33.

As shown in FIGS. 1 and 2, at least one lock projection 36 (particularly substantially in the form of a block projecting upward and long in forward and backward directions FBD) is provided on (particularly the top of) the receptacle 33. As shown in FIG. 5, a locking piece 37 (particularly made of metal) is mounted on a rear part of this lock projection 36 to at least partly cover the rear part of the lock projection 36. When the receptacle 33 and the charging-side receptacle are properly fitted, an unillustrated lock claw provided on the charging connector and the locking piece 37 of the lock projection 36 are engaged in a pulling direction, whereby the receptacle 33 and the charging-side receptacle are held or locked in a fitted state. As shown in FIGS. 1 and 2, one or more, particularly a pair of protection walls 38, 38 standing upward from the upper end of the receptacle 33 are formed adjacent to the lock projection 36 particularly so as to face each other on the opposite left and right sides of the lock projection 36. This pair of protection walls 38, 38 particularly extend backward from a position before the lock projection 36 toward the mounting piece 31 located behind and particularly protect the lock projection 36 from external interference in a lateral direction.

On the other hand, as shown in FIGS. 1 and 2, at least one positioning recess 39 projecting radially outward (e.g. downward) is provided in (particularly a lower part of) the receptacle 33. This positioning recess 39 functions to guide the charging-side receptacle to a proper fitted position by guiding an unillustrated positioning rib provided on the charging-side receptacle of the charging connector thereinto in connecting the charging connector.

As shown in FIG. 4, at least one flange 34A projecting outward over the entire circumference particularly is formed on the front end of the collar 34 press-fitted to the mounting piece 31. On the other hand, at least one holding portion 40 projecting forward from the front surface of the mounting piece 31 is formed at the outer peripheral edge of the front end of the collar mounting hole 31A of the mounting piece 31. That is, the thickness of the holding portion 40 in forward and backward directions FBD particularly is set to be larger than that of the mounting piece 31 at an outer peripheral edge portion of the receptacle 33. Further, a (particularly substantially circular) accommodating groove 40A (particularly having a depth substantially equal to the thickness of the flange 34A of the collar 34) is formed in the holding portion 40 by recessing the front end surface of the holding portion 40 backward.

The flange 34A of the collar 34 particularly can be accommodated into this accommodating groove 40A, and/or the bottom surface (front surface) of the accommodating groove 40A and the rear surface of the flange 34A particularly are engaged in a connecting direction and the mounting piece 31 is so held as not be detached from the collar 34 particularly by at least partly accommodating the flange 34A into the accommodating groove 40A. In this way, the bottom surface of the accommodating groove 40A and the rear surface of the flange 34A can be reliably engaged to suppress the detachment of the mounting piece 31 from the collar 34, for example, even if the forward projecting portion 32A and the receptacle 33 are strongly pulled forward or a force acts on the forward projecting portion 32A and the receptacle 33 in a direction crossing forward and backward directions FBD.

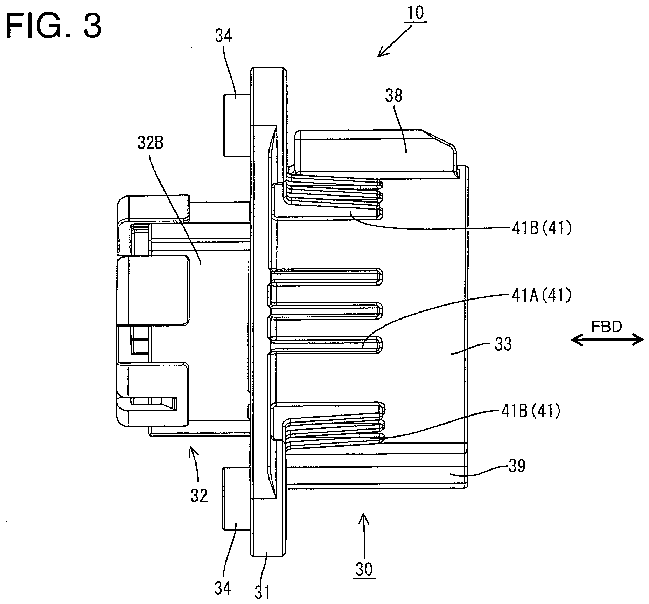

On the other hand, the mounting piece 31 is formed with one or more reinforcing portions 41 extending from the mounting piece 31 to the receptacle 33. These reinforcing portions 41 are formed to integrally or unitarily connect the front surface of the mounting piece 31 and the outer peripheral surface of the receptacle 33 and, as shown in FIGS. 1 and 2, in the form of flat plates projecting laterally or radially from the outer surface of the receptacle 33 and projecting forward from the front surface of the mounting piece 31.Specifically, one or more (e.g. three) reinforcing portions 41 are formed at each of a total of six positions, specifically on the substantially opposite lateral sides of the receptacle 33, positions of the receptacle 33 at the substantially opposite lateral (left and right) sides of the lock projection 36 and/or positions of the receptacle 33 at the substantially opposite lateral (left and right) sides of the positioning recess 39 and, as shown in FIG. 2, substantially radially extend from the outer peripheral surface of the receptacle 33. As shown in FIGS. 1 and 3, the reinforcing portions 41 arranged on the substantially opposite lateral sides of the receptacle 33 are (particularly large-size) reinforcing portions 41 A projecting in the lateral and forward directions more than the other reinforcing portions 41 and those arranged at the substantially opposite lateral (left and right) sides of the lock projection 36 and/or those arranged at the substantially opposite lateral (left and right) sides of the positioning recess 39 are (particularly small-size) reinforcing portions 41 B particularly smaller than the large-size reinforcing portions 41 A.

The large-size reinforcing portions 41 A substantially extend from opposite lateral end portions of the mounting piece 31 to an intermediate part (particularly a substantially central part) of the receptacle 33 in forward and backward directions FBD.

The small-size reinforcing portions 41 B are integrally or unitarily formed to the holding portions 40 provided at or near the respective (e.g. four) corners of the mounting piece 31 and substantially extend straight from the holding portions 40 to an intermediate part (particularly a substantially central part) of the receptacle 33 in forward and backward directions FBD.

The vehicle-side connector 10 of this embodiment is configured as described above. Next, functions and effects thereof are described.

As shown in FIGS. 4 and 5, the vehicle-side connector 10 of this embodiment is bolted to the vehicle B. In charging, the unillustrated charging connector is connected from front. When the charging is completed, the charging connector is pulled backward from the vehicle-side connector 10.

Since the charging connector used for the vehicle is normally gun-shaped, a pulling force may act in a direction crossing a proper pulling direction, e.g. in a downward direction X when it is tried to pull the charging connector in the proper puling direction. Then, a strong force acts also on the receptacle 33 and the forward projecting portion 32A in the downward direction X crossing the pulling direction and stress may be concentrated on parts of the mounting piece 31 where the collars 34 are press-fitted and a boundary part between the mounting piece 31 and the receptacle 33. However, since the bottom surfaces of the accommodating grooves 40A of the holding portions 40 in the mounting piece 31 and the rear surfaces of the flanges 34A of the collars 34 can be reliably engaged according to this embodiment, the detachment of the mounting piece 31 from the vehicle can be suppressed.

Further, since the boundary part between the mounting piece 31 and the receptacle 33 is reinforced by a plurality of reinforcing portions 41, it can be suppressed that the boundary part between the mounting piece 31 and the receptacle 33 is cracked or split. Specifically, a plurality of (particularly large-size) reinforcing portions 41A withstand a force acting in the lateral direction and the force acting in the lateral direction is distributed to the mounting piece 31 and the receptacle 33 by the plurality of (particularly large-size) reinforcing portions 41 A. Further, a plurality of (particularly small-size) reinforcing portions 41 B withstand a force acting in the vertical direction and the force acting in the vertical direction is distributed to the mounting piece 31 and the receptacle 33 by the plurality of (particularly small-size) reinforcing portions 41 B. This can suppress the breakage of the mounting piece 31 and the receptacle 33 even if a force acts on the receptacle 33 and the forward projecting portion 32A in the vertical or lateral direction.

Further, the thick holding portions 40 particularly are arranged in parts between the outer peripheral edge portions of the collars 34 and the outer surface of the receptacle 33 where a pulling force is concentrated most, and the plurality of (particularly small-size) reinforcing portions 41 B integrally or unitarily formed to the holding portions 40 substantially are arranged straight. Thus, these parts can be reliably reinforced and a pulling force can be efficiently distributed. This can further suppress the detachment of the mounting piece 31 and the breakage of the mounting piece 31 and the receptacle 33. Further, the mounting piece 31 can be reinforced only by making peripheral parts of the collars 34 thick without making the entire mounting piece 31 thick.

As described above, according to this embodiment, it is possible to suppress the detachment of the mounting piece 31 from the collars 34 and reinforce the receptacle 33 and the mounting piece 31 without making the mounting piece 31 thick. Thus, the formation of sinks on the surface of the mounting piece 31 in molding the mounting piece 31 can be suppressed. This can improve the adhesion of the surface seal S to the mounting piece 31.

Accordingly, to suppress the detachment of a mounting piece from a vehicle and the breakage of a boundary part between the mounting piece and a connecting portion, a vehicle-side connector 10 to be connected to a charging connector for or in charging a battery of a vehicle includes a receptacle 33 which is made of synthetic resin and to be connected to the charging connector, a mounting piece 31 which is made of synthetic resin and integrally or unitarily provided to the outer peripheral surface of the receptacle 33, one or more collars 34 (particularly each) including a flange 34A engageable with the mounting piece 31 in a connecting direction, and one or more reinforcing portions 41 integrally or unitarily connected to the mounting piece 31 and the receptacle 33.

### <Other Embodiments>

The present invention is not limited to the above described and illustrated embodiment. For example, the following embodiments are also included in the technical scope of the present invention.
(1) Although the collars 34 are press-fitted into the collar mounting holes 31 A of the mounting piece 31 to engage the accommodating grooves 40A of the holding portions 40 and the flanges 34A of the collars 34 in the above embodiment, the present invention is not limited to such a mode. For example, a mounting piece may be molded with the collars 34 as inserts and the mounting piece and the flanges 34A of the collars 34 may be engaged in forward and backward directions.
(2) Although the receptacle 33 has a cylindrical shape in the above embodiment, the present invention is not limited to such a mode and may be applied, for example, to a receptacle in the form of a rectangular tube.
(3) Although the connecting portion is configured as the receptacle 33 in the above embodiment, the present invention is not limited to such a mode. For example, the receptacle 33 may not be provided and the connecting portion may be configured as the exposed terminal accommodating portion 32.
(4) Although the mounting piece 31 is formed on the outer peripheral surface of the terminal accommodating portion 32 over the entire circumference in the above embodiment, the present invention is not limited to such a mode. For example, mounting pieces may be formed only in parts where the collars 34 are press-fitted.

### LIST OF REFERENCE SIGNS

- 10:: vehicle-side connector
- 31:: mounting piece
- 33:: receptacle (connecting portion)
- 34:: collar
- 34A:: flange
- 40:: holding portion
- 41:: reinforcing portion
- B:: vehicle

## Claims

1. A vehicle-side connector (10) to be connected to a charging connector for charging a battery of a vehicle (B), comprising:
a connecting portion (33) which is made of synthetic resin and to be connected to the charging connector;
a mounting piece (31) which is made of synthetic resin and integrally or unitarily provided to the outer surface of the connecting portion (33);
at least one collar (34) which includes a flange (34A) engageable with the mounting piece (31) in a connecting direction;
wherein the mounting piece (31) includes at least one holding portion (40) to be engaged with the flange (34A) of the collar (34);
**characterized in that**
the holding portion (40) is thicker than the mounting piece (31) at an outer peripheral edge portion of the connecting portion (33) and provided at an outer peripheral edge portion of the collar (34); and
a plurality of reinforcing portions (41) is provided to connect the mounting piece (31) and the connecting portion (33), wherein the reinforcing portions (41) comprise one or more large-size reinforcing portions (41 A) projecting to a space between adjacent collars (34) and one or more small-size reinforcing portions (41 B) projecting towards at least part of the collars (34).

2. A vehicle-side connector according to claim 1, wherein the mounting piece (31) is formed to project from the outer surface of the connecting portion (33) over the entire circumference.

3. A vehicle-side connector according to claim 2, wherein a plurality of reinforcing portions (41) in the form of substantially flat plates are integrally or unitarily formed to a surface of the mounting piece (31) substantially facing the connecting portion (33) and the outer surface of the connecting portion (33).

4. A vehicle-side connector according to any one of the preceding claims, wherein the holding portion (40) is integrally or unitarily formed to the reinforcing portion (41).

5. A vehicle-side connector according to any one of the preceding claims, wherein the flange (34A) of the collar (34) is accommodated into an accommodating groove (40A) of the holding portion (40), and a surface of the accommodating groove (40A) and a surface of the flange (34A) are engaged in a connecting direction and the mounting piece (31) is so held as not be detached from the collar (34) by at least partly accommodating the flange (34A) into the accommodating groove (40A).

6. A vehicle-side connector according to any one of the preceding claims, wherein the large-size reinforcing portions (41 A) extend to an edge of the mounting piece (31).

7. A vehicle-side connector according to any one of the preceding claims, wherein the large-size reinforcing portions (41 A) project in the lateral and/or forward directions more than the small-size reinforcing portions (41 B) being smaller than the large-size reinforcing portions (41 A).

## Patentansprüche

1. Fahrzeugseitiger Verbinder (10), der mit einem Ladeverbinder zum Laden einer Batterie eines Fahrzeugs (B) zu verbinden ist, umfassend:
einen Verbindungsabschnitt (33), der aus Kunstharz besteht und mit dem Ladeverbinder zu verbinden ist;
ein Montagestück (31), das aus Kunstharz besteht und integral oder unitär bzw. einstückig an der äußeren Fläche bzw. Oberfläche des Verbindungsabschnitts (33) bereitgestellt ist;
zumindest einen Kragen (34), der einen Flansch (34A) enthält, der mit dem Montagestück (31) in einer Verbindungsrichtung in Eingriff bringbar ist;
wobei das Montagestück (31) zumindest einen Halteabschnitt (40) enthält, der mit dem Flansch (34A) des Kragens (34) in Eingriff zu bringen ist;
**dadurch gekennzeichnet, dass**
der Halteabschnitt (40) dicker ist als das Montagestück (31) an einem äußeren Umfangsrand- bzw. -kantenabschnitt des Verbindungsabschnitts (33), und an einem äußeren Umfangsrand- bzw. -kantenabschnitt des Kragens (34) bereitgestellt ist; und
eine Mehrzahl von Verstärkungsabschnitten (41) bereitgestellt ist, um das Montagestück (31) und den Verbindungsabschnitt (33) zu verbinden, wobei die Verstärkungsabschnitte (41) einen oder mehrere große Verstärkungsabschnitte (41A), die zu einem Raum zwischen angrenzenden an bzw. benachbarten Kragen (34) vorspringen, und einen oder mehrere kleine Verstärkungsabschnitte (41 B) umfassen, die zu zumindest einem Teil der Kragen (34) vorspringen.

2. Fahrzeugseitiger Verbinder nach Anspruch 1, wobei das Montagestück (31) dahingehend gebildet ist, von der äußeren Fläche des Verbindungsabschnitts (33) über den gesamten Umfang vorzuragen.

3. Fahrzeugseitiger Verbinder nach Anspruch 2, wobei eine Mehrzahl von Verstärkungsabschnitten (41) in der Form von im Wesentlichen flachen Platten integral oder unitär bzw. einstückig zu einer Fläche bzw. Oberfläche des Montagestücks (31) gebildet ist, die dem Verbindungsabschnitt (33) und der äußeren Fläche des Verbindungsabschnitts (33) im Wesentlichen zugewandt ist.

4. Fahrzeugseitiger Verbinder nach einem der vorhergehenden Ansprüche, wobei der Halteabschnitt (40) integral oder unitär bzw. einstückig zu dem Verstärkungsabschnitt (41) gebildet ist.

5. Fahrzeugseitiger Verbinder nach einem der vorhergehenden Ansprüche, wobei der Flansch (34A) des Kragens (34) in eine Aufnahmenut bzw. -rille (40A) des Halteabschnitts (40) aufgenommen ist, und wobei eine Fläche bzw. Oberfläche der Aufnahmenut (40A) und eine Fläche bzw. Oberfläche des Flanschs (34A) in einer Verbindungsrichtung in Eingriff sind bzw. gebracht werden, und wobei das Montagestück (31) so gehalten ist, dass es nicht von dem Kragen (34) gelöst wird, und zwar durch zumindest teilweises Aufnehmen des Flanschs (34A) in der Aufnahmenut (40A).

6. Fahrzeugseitiger Verbinder nach einem der vorhergehenden Ansprüche, wobei sich die großen Verstärkungsabschnitte (41A) zu einer Kante bzw. Rand des Montagestücks (31) erstrecken.

7. Fahrzeugseitiger Verbinder nach einem der vorhergehenden Ansprüche, wobei die großen Verstärkungsabschnitte (41A) in der lateralen Richtung und/oder Vorwärtsrichtung stärker vorragen als die kleinen Verstärkungsabschnitte (41 B), die kleiner sind als die großen Verstärkungsabschnitte (41 A).

## Revendications

1. Connecteur côté véhicule (10) devant être connecté à un connecteur de chargement pour charger une batterie d'un véhicule (B), comprenant :
une portion de connexion (33) qui est réalisée en résine synthétique et devant être connectée au connecteur de chargement ;
une pièce de montage (31) qui est réalisée en résine synthétique et prévue de manière intégrante ou unitaire sur la surface externe de la portion de connexion (33) ;
au moins un collier (34) qui inclut une bride (34A) pouvant être engagée avec la pièce de montage (31) dans une direction de connexion ;
dans lequel la pièce de montage (31) inclut au moins une portion de maintien (40) devant être engagée avec la bride (34A) du collier (34) ;
**caractérisé en ce que**
la portion de maintien (40) est plus épaisse que la pièce de montage (31) au niveau d'une portion de bord périphérique externe de la portion de connexion (33) et prévue au niveau d'une portion de bord périphérique externe du collier (34) ; et
une pluralité de portions de renforcement (41) est prévue pour connecter la pièce de montage (31) et la portion de connexion (33), dans lequel les portions de renforcement (41) comprennent une ou plusieurs portions de renforcement de grande taille (41A) faisant saillie vers un espace entre des colliers adjacents (34) et une ou plusieurs portions de renforcement de petite taille (41B) faisant saillie vers au moins une partie des colliers (34).

2. Connecteur côté véhicule selon la revendication 1, dans lequel la pièce de montage (31) est formée pour faire saillie depuis la surface externe de la portion de connexion (33) sur la circonférence entière.

3. Connecteur côté véhicule selon la revendication 2, dans lequel une pluralité de portions de renforcement (41) sous la forme de plaques essentiellement plates sont formées de manière intégrante ou unitaire sur une surface de la pièce de montage (31) essentiellement tournée vers la portion de connexion (33) et la surface externe de la portion de connexion (33).

4. Connecteur côté véhicule selon l'une quelconque des revendications précédentes, dans lequel la portion de maintien (40) est formée de manière intégrante ou unitaire sur la portion de renforcement (41).

5. Connecteur côté véhicule selon l'une quelconque des revendications précédentes, dans lequel la bride (34A) du collier (34) est hébergée dans une rainure d'hébergement (40A) de la portion de maintien (40), et une surface de la rainure d'hébergement (40A) et une surface de la bride (34A) sont engagées dans une direction de connexion et la pièce de montage (31) est maintenue de manière à ne pas être déconnectée du collier (34) en hébergeant au moins partiellement la bride (34A) dans la rainure d'hébergement (40A).

6. Connecteur côté véhicule selon l'une quelconque des revendications précédentes, dans lequel les portions de renforcement de grande taille (41 A) s'étendent vers un bord de la pièce de montage (31).

7. Connecteur côté véhicule selon l'une quelconque des revendications précédentes, dans lequel les portions de renforcement de grande taille (41A) font davantage saillie dans les directions latérale et/ou avant que les portions de renforcement de petite taille (41B) qui sont plus petites que les portions de renforcement de grande taille (41 A).
